# EUROPEAN PATENT APPLICATION

(11) **EP 3 473 667 A1**
(43) Date of publication of application: **24.04.2019**
(21) Application number: 17196886.0
(22) Date of filing: 17.10.2017
(51) Int. Cl.: C08J 9/08, C01B 32/60

(54) **EXTRUSION PROCESS FOR THE PREPARATION OF ALKALI METAL BICARBONATE FORMULATIONS USING A FUNCTIONALIZING AGENT WITH A MELTING POINT LOWER THAN EXTRUSION TEMPERATURE**

(71) Applicant: SOLVAY SA, 1120 Brussels (BE)
(72) Inventor: KABBABE MALAVE, Jorge Alejandro, 92340 Bourg-La-Reine (FR); CAVALIER, Karine, 1180 UCCLE (BE); DETOISIEN, Thibaud, 54110 Dombasle-sur-Meurthe (FR)
(74) Representative: Teipel, Stephan

(57) **Abstract**

A process for preparing a functionalized alkali metal bicarbonate formulation, comprising an extrusion of a paste-like mixture comprising a functionalizing agent and a particulate alkali metal bicarbonate, wherein the functionalizing agent has a melting point less than the extrusion operating temperature, preferably less than ambient temperature. The functionalizing agent is in liquid form when mixed with the particulate alkali metal bicarbonate. There is no need for melting and/or dissolution of the agent for forming the mixture therefore more cost effective and result in improved properties on CO2 gas release. The functionalized alkali metal bicarbonate formulation can be used into or as a foaming agent. Foamable polymer composition comprising the functionalized alkali metal bicarbonate formulation. The use of this composition in plastic foaming, particularly in PVC foams.

## Description

### CROSS-REFERENCE TO RELATED APPLICATIONS

not applicable

### FIELD OF THE INVENTION

The invention relates to a process for preparing a formulation comprising an alkali metal bicarbonate by extrusion of a paste-like composition obtained by admixing the alkali metal salt with a liquid functionalizing agent; also relates to a formulation comprising the alkali metal bicarbonate obtainable from said process and to the use of this formulation e.g., as foaming agents for plastics. The invention also relates to a foamable composition containing it, such as a PVC plastisol, and to its use/method for manufacturing a thermoplastic foamed polymer, in particular foamed PVC.

### BACKGROUND

Polymer foams are found virtually everywhere in our modern world and are used in a wide variety of applications such as disposable packaging of fast-food, the cushioning of furniture and insulation material.

Polymer foams are made up of a solid and gas phase mixed together to form a foam. By combining the two phases fast results in foaming and forming a polymer matrix with either gas bubbles or gas tunnels incorporated in it, which is known as either closed-cell or open-cell structure. Closed-cell foams are generally more rigid, while open-cell foams are usually flexible.

The gas that is used in the foam is termed a blowing agent, and can be either chemical or physical. Chemical blowing agents are chemicals that take part in a reaction or decompose, giving off a gas in the process. Physical blowing agents are gases that do not react chemically in the foaming process and are therefore inert to the polymer forming the matrix.

For the processing of thermoplastic materials, such as polyvinyl chloride (PVC) or polyolefins (PO, PE, PP), styrenics (PS, ABS, ASA, SAN) and natural and synthetic rubber such as nitrile butadiene rubber (NBR) or chloroprene rubber (CR), chemical blowing agents are used for decades. Chemical blowing agents are additives in the manufacturing of foamed thermoplastic polymers. Chemical blowing agents are stable at room temperature but decompose at elevated temperatures during the processing of the polymers while generating gas. This gas creates a foam structure in the thermoplastic polymer. Chemical blowing agents are used in a wide variety of applications including the production of foamed wall papers, artificial leather, floor and wall coverings, carpet backings, thermal insulation materials, insulation sealants, footwear, automotive components, cable insulation, and packaging materials.

Established blowing agents are exothermic blowing agents such as azodicarbonic acid diamide (azodicarbonamide, ADC, ADCA, CAS No. 123-77-3), the sulfonhydrazides 4,4'-oxybis(benzenesulfonylhydrazide) (OBSH, CAS No. 80-51-3) and p-toluenesulfonylhydrazide, (TSH, CAS No. 1576-35-8) and endothermic blowing agents such as carbonates, like sodium bicarbonate (SBC, NaHCO₃, CAS No. 144-55-8), and citric acid and its esters.

Since many years, azodicarbonamide (ADC) is one of the most effective and widely used chemical blowing agents for use in cellular thermoplastic and rubber applications (cf. for example DE-AS 1 037 700). Azodicarbonamide decomposes on heating to give a high volume of gas, which consists mainly of nitrogen and carbon monoxide. These decomposition products are suitable to create a fine and uniform cell structured foam with a little shrink, a property which is fundamental in the production of soft foams such as plasticized PVC (P-PVC) or rubber foams. The decomposition temperature of azodicarbonamide can be reduced from 200 - 220 degrees centigrade to as low as 125 degrees centigrade by the addition of suitable activators (kickers), but useful decomposition rates are usually only achieved at 140 degrees centigrade and above. Activators or kickers are additives known in the art which are used to influence the decomposition temperature and rate of gas release of the blowing agent.

Azodicarbonamide may be combined with other chemical blowing agents in order to improve the processing behavior of the thermoplastic material and to optimize the end product. For example, in cellular rigid PVC (U-PVC; without softening of the polymer by adding plasticizers) applications such as foamed profile or sheet, ADC may be used in combination with sodium bicarbonate to produce a foam structure with acceptable technical performance (GB2314841). Because of differences in melt rheology, processing and demands on the foam structure, this technique cannot be transferred to plasticized, soft PVC and PVC plastisol processing.

However, azodicarbonamide as a blowing agent in plastics has been banned in the European Union since August 2005 for the manufacture of plastic articles that are intended to come into direct contact with food.

Furthermore, in December 2012, the European Chemicals Agency (ECHA) announced that azodicarbonamide was to be included in their Candidates List of Substances of Very High Concern (SVHC) under Articles 57 and 59 of the Reach Regulation, which will limit or restrict the future use of ADC. Therefore, there is a need for substitutes for ADC having the same beneficial performance, especially for applications in foamed PVC.

Possible alternative solutions are provided by the classes of sulfonylhydrazides and carbonates, but these substances exhibit some disadvantages when used as blowing agents, especially when used for applications in plasticized, soft PVC.

p-Toluenesulfonylhydrazide (TSH) starts decomposition at a temperature of about 105 degrees centigrade, which is considered as being too low for the processing of rigid and plasticised PVC. 4,4'-Oxybis(benzenesulfonylhydrazide) (OBSH) also releases nitrogen upon decomposition but the gas generation characteristic is different to that of azodicarbonamide. At temperatures above the decomposition point of OBSH the nitrogen release is rapid, but occurs at a different temperature compared to azodicarbonamide. Below the absolute product decomposition temperature of about 155 degrees centigrade, the decomposition and thus the gas release is slow. Additionally OBSH has the disadvantage that the decomposition products and the foamed end article produced have an unintended brownish discoloration at the typical P-PVC processing temperatures which are higher than 180 degrees centigrade

The carbonates such as sodium bicarbonate do not liberate nitrogen but carbon dioxide and possibly water upon decomposition. Typically for carbon dioxide is its high solubility in the polymer, but it permeates out of the polymer matrix more rapidly than nitrogen, making it less efficient as a foaming agent, especially in plasticized PVC applications. The carbonates are generally not useful for the production of soft foams with a fine and uniform cell structure with little shrink. Sodium bicarbonate, the most common representative of the carbonates used as chemical blowing agents, has a slow decomposition and release of gas, which occurs over a wider temperature range in comparison to both ADC and OBSH. The decomposition temperature of sodium bicarbonate can be influenced by citric acid.

Alkali metal bicarbonate particles, such as sodium bicarbonate particles and potassium bicarbonate particles, are known in the art. These products have many properties which make them interesting and extensively used in several technical fields, such as pharmaceutical industry, the feed and food industry, and the cosmetic industry.

The most common way to manufacture bicarbonate particles is crystallization by carbonization with carbon dioxide of a solution or suspension of the corresponding alkali metal (sodium or potassium carbonate for example) or a solution or suspension of the hydroxide of the corresponding alkali metal. It is also common to crystallize bicarbonates by controlled cooling of bicarbonate solutions or suspensions, or by evaporating the solvent of such solutions or suspensions.

For the industrial use of alkali metal bicarbonate particles control of specific properties of the particles is required, such as: decomposition temperature, or their dissolution time.

Methods to control some parameters of alkali metal bicarbonate particles, such as a bulk density are known in the art. For instance, US 5,411,750 discloses a method of producing sodium bicarbonate powder with a bulk density between 70 and 500 kg/m³. The particles are prepared by spray-drying a dilute aqueous solution or suspension of the bicarbonate with an alkali metal salt as additive.

WO 2014/096457 discloses a method for producing sodium bicarbonate particles by spray-drying of an aqueous solution comprising 1 - 10 % by weight of sodium bicarbonate in an additive selected from the group consisting of magnesium salt, sodium alkyl benzene sulfonat and soybean lecithin.

The alkali metal bicarbonate particles produced by spray-drying are generally fine particles. Accordingly, in order to modify the shape of the particles, different unit operations need to be performed such as crystallization processes, grinding processes, drying processes and/or sieving processes. These procedural steps are expensive, time consuming and may not be suitable to produce specific particle shapes that are required for specific applications of the alkali metal bicarbonate.

In CN 104393077 A, a coating for a solar cell is disclosed, which is obtained by melting, extruding, granulating a composition comprising silicone, sodium bicarbonate, 3-chloropropyl-alkyne, urethane acrylate, a stabilizer and a surfactant, followed by the addition of further sodium bicarbonate. The concentration of sodium bicarbonate in the coating, as disclosed in the examples of CN 104393077 A, ranges from 9.6 to 12.3 % by weight. However, this process appears to use sodium bicarbonate as a source for Na₂O, since melting is carried out at high temperatures, between 600 to 800 °C, thereby releasing CO₂ under formation of Na₂O, making it necessary to add further sodium bicarbonate after the extrusion has been carried out.

The above mentioned non-azodicarbonamide blowing agents fail to meet the expected requirement profile of a good blowing agent, and are in need of improvement in this respect.

In view of the above, there is still a need for a process for the preparation of an alkali metal bicarbonate formulations, which can easily be modified in terms of their shape and size, also enabling the adjustment of the porosity and the bulk density of the formulation. At the same time, it would be desirable if the formulation obtained from said process showed advantageous properties such as impacting CO₂ release, and a chemical reactivity that can be adjusted with respect to the desired application.

### SUMMARY

During foaming of polymer resin (plastisol or extrusion process) when particles of non-functionalized sodium bicarbonate are used as foaming agent, it was observed that the gas release occurs earlier than expected, due to the quick decomposition of bicarbonate. It has been found that functionalizing the bicarbonate particles by extrusion with specific additives that have a melting point lower than the operating temperature used during extrusion, enhances the protection of the bicarbonate particles with an inactive barrier, which delays the thermal decomposition and provides a better CO2 release property for making a foaming agent.

When a particulate bicarbonate without this agent, also called particulate non-functionalized bicarbonate, is used as a blowing agent, the resulting foamable polymer composition has a higher viscosity than a foamable polymer composition using a different chemical foaming agent: azodicarbonamide. Such high viscosity of the foamable polymer composition (with only particulate non-functionalized bicarbonate) results in a foamed polymer composition which is denser than a foamed polymer made with azodicarbonamide as foaming agent. The higher viscosity obtained with particulate non-functionalized bicarbonate used as the chemical foaming agent generally results in poor density (>0.6 g/ml) and low thickness (< 2 mm) of a PVC sheet made from the foamable composition.

The functionalized particulate bicarbonate made by this process provides a suitable blowing agent for foamed or extruded polymers (such as foamed PVC or polyurethanes; extruded PVC, polyolefins, polyamides), preferably a suitable endothermic blowing agent. Non-limiting examples of polymers are polyvinyl chloride (PVC), polyurethanes, polyolefins (PO, PE, PP), styrenics (PS, ABS, ASA, SAN), engineering resins, polyphenylene oxide, polyamides, polyimides, and natural and synthetic rubber such as nitrile butadiene rubber (NBR) or chloroprene rubber (CR).

It has been surprisingly found that an alkali metal bicarbonate can be provided in a paste-like composition suitable for extrusion by admixing the alkali metal bicarbonate with a functionalizing agent that has a melting point lower than the extrusion operating temperature. By means of extrusion, the paste paste-like composition can easily be modified with respect to its shape and size, porosity and bulk density to give an alkali metal bicarbonate which shows excellent duration of dissolution and excellent CO₂ release properties can be obtained thereof by means of extruding the paste-like composition. Also, the chemical reactivity of the alkali metal bicarbonate formulation can be adjusted by means of selection of the functionalizing agent. This process does not require for the functionalization agent to be melted or dissolved into a solvent in order for the agent to be mixed with the alkali metal bicarbonate particles before or during extrusion. The functionalizing agent has a melting point less than the extrusion operating temperature, preferably less than ambient temperature (generally about 20°C). The functionalizing agent is in liquid form when mixed with the particulate alkali metal bicarbonate. There is no need for melting and/or dissolution of the agent for forming the mixture therefore this process is more cost effective and result in improved properties of the functionalized bicarbonat on CO2 gas release, and ultimately in its ability to release CO2 within an appropriate timeframe.

It was further found in particular, that even when compounds that contain a similar chemical backbone, for example polymers made from the same monomer(s), the polymer compound having a melting point lower than the extrusion operating temperature (hence one that is liquid during extrusion) results in obtaining a particulate functionalized bicarbonate with better foaming properties than a particulate functionalized bicarbonate made using a similar polymer compound having a melting point higher than the extrusion operating temperature.

For example, when a particulate sodium bicarbonate is functionalized by extrusion at room temperature with a polyethylene glycol, a polyethylene glycol with a melting point less than room temperature provides a functionalized sodium bicarbonate which when used as a foaming agent provides a better expansion ratio for a spread PVC foam than functionalized sodium bicarbonate extruded with a polyethylene glycol having a melting point higher than room temperature.

In view of the above, the present invention relates to:
Item 1. A process for preparing a formulation comprising an alkali metal bicarbonate, wherein said process comprises the steps of:
   (a) mixing a functionalizing agent and a particulate alkali metal bicarbonate to obtain a paste-like mixture; and
   (b) extruding the paste-like mixture obtained in step (a) at an extrusion operating temperature, wherein the functionalization agent has a melting temperature less than the extrusion operating temperature.
Item 2. The process of item 1, wherein the paste-like mixture undergoing extrusion comprises at least 25% by weight of said alkali metal bicarbonate based on the total weight of the mixture undergoing extrusion (that includes the functionalizing agent and alkali metal bicarbonate).
Item 3. The process of item 1, wherein at step (a) the weight ratio of functionalizing agent is at least 3, more preferably at least 5, even more preferably at least 10, even more preferably at least 15 parts per 100 parts of alkali metal bicarbonate;
Item 4. The process of any preceding items, wherein at step (b) the formulation is a powder, filaments or granules, comprising alkali metal bicarbonate particles and the functionalizing agent.
Item 5. The process of any of the items 1 to 4, comprising after step (b) the step: (c) cooling the formulation to below the melting temperature of the functionalizing agent to obtain a cooled formulation in form of a powder, or cooled filaments or cooled granules of the alkali metal salt and the functionalizing agent.
Item 6. The process of any one of the preceding items, wherein the extrusion operating temperature is ambient temperature, and wherein the functionalizing agent is selected with the proviso that its melting temperature is less than ambient temperature.
Item 7. The process of any one of the items 1-6, wherein the mixture undergoing extrusion excludes a stearate salt.
Item 8. The process of any one of the items 1-6, wherein the mixture undergoing extrusion further includes a stearate salt.
Item 9. The process of item 8, wherein the stearate salt was milled with the particulate sodium bicarbonate before the resulting milled composition is extruded with the functionalization agent.
Item 10. The process of any one of the preceding items, wherein the melting point of the functionalizing agent is at most 20°C, preferably at most 15°C.
Item 11. The process of any one of the preceding items, wherein the functionalizing agent comprises a polyoxyethylene compound.
Item 12. The process of item 11, wherein the polyoxyalkylene compound comprises or consists of:
   a polyethylene glycol (PEG) polymer, preferably of a MW of 2000 or less, or a MW of 1000 or less, or a MW of 800 or less,
   a polypropylene glycol (PPG) polymer,
   a co-polymer or block polymer which is made with at least one monomer of propylene glycol,
   a co-polymer or block polymer which is made with at least one monomer of ethylene glycol,
   a polyethylene glycol / polypropylene glycol (PEG/PPG) block co-polymer, such as the PEG/PPG/PEG triblock polymer, or
   any derivatives (such as esters) thereof,
Item 13. The process of any one of the items 1-11, wherein the polyoxyalkylene compound comprises a polyethylene glycol, preferably a polyethylene glycol with a molecular weight less than 1000 g/mol.
Item 14. The process of any one of the items 1-11, wherein the polyoxyalkylene compound comprises a polyoxyalkylene derivative which is an ester, such as a PEG or PPG ester.
Item 15. The process of any one of the items 1-11, wherein the polyoxyalkylene agent is a polyoxyalkylene derivative which is a chemically functionalized polyoxyalkylene, for example, a polyoxyalkylene bearing one or more reactive substituents, such as -OH, -NH₂, -NHR, -SH and -COOH, wherein R is a hydrocarbon residue, and which has been reacted with a functional chemical compound being reactive with the reactive substituent of the polyoxyalkylene.
Item 16. The process of any one of the items 1-11, wherein the functionalized particulate bicarbonate comprises at least 50% by weight and less than 100% by weight of the bicarbonate component, and from 50% or less to 0.02% by weight of at least one of said functionalization agent, preferably comprises at least 65% by weight and less than 100% by weight of the bicarbonate component, and from 35% or less to 0.02% by weight of at least one of said functionalization agent.
Item 17. The process of any one of the preceding items, wherein the alkali metal bicarbonate used at step (a) is made of particles, and the medium particle size (D50 in weight) of said particles is 10-300 µm, preferably 20-200 µm, more preferably 30-150 µm, more preferably 40-130 µm.
Item 18. The process of item 5, wherein in a step (d) the cooled filaments or granules are subsequently cut into pieces or milled.
Item 19. The process of any one of the preceding items, wherein the extrusion is performed on a screw extruder, e.g., a single screw extruder or a twin screw extruder.
Item 20. The process of any one of the preceding items, wherein the alkali metal bicarbonate particles are encapsulated by the functionalizing agent.
Item 21. An alkali metal bicarbonate formulation obtainable by an extrusion process according to any one of items 1 to 20, wherein the formulation comprises alkali metal bicarbonate and a functionalizing agent, and wherein the formulation is in the form of a powder, filaments or granules, wherein the granules have a spherical, cubic or cylindrical shape.
Item 22. An alkali metal bicarbonate formulation or the alkali metal salt formulation according to item 21, wherein the formulation comprises
   at least 50 % by weight of an alkali metal bicarbonate,
   less than 10 % by weight of an alkali metal carbonate,
   less than 10 % by weight of water, and
   from at least 3 wt% to less than 50 % by weight of functionalizing agent.
Item 23. The alkali metal bicarbonate formulation of item 22, wherein the formulation comprises at least 50%, more preferably at least 60%, even more preferably at least 65%, even more preferably at least 70%, or at least 80% by weight of the alkali metal bicarbonate, based on the total amount of the alkali metal bicarbonate formulation.
Item 24. The alkali metal bicarbonate formulation of any one of items 22 to 23, wherein the formulation is in the form of filaments or granules having a diameter of at least 100 µm, preferably of at least 200 µm, more preferably of at least 500 µm, even more preferably of at least 1 mm.
Item 25. The alkali metal bicarbonate formulation of any one of items 22 to 24, wherein the formulation is in the form of filaments or granules having a diameter of at most 100 mm, preferably of at most 50 mm, more preferably of at most 5 mm, even more preferably of at most 2 mm.
Item 26. The alkali metal bicarbonate formulation of any one of items 22 to 25, wherein the formulation is in the form of filaments or granules having a length to diameter ratio of at least 0.4 and preferably of at most 4.
Item 27. Use of the alkali metal bicarbonate formulation according to any one of items 22 to 26 as blowing or foaming agent for polymers.
Item 28. A chemical blowing agent comprising or consisting of the alkali metal bicarbonate formulation according to any one of items 22 to 26.
Item 29. A foamable polymer composition, comprising a polymer, optionally a foaming stabilizer, and the chemical blowing agent according to item 28, wherein the polymer is a PVC, a polyurethane, a polyolefin, or a polyamide.
Item 30. A foamable PVC plastisol composition, comprising a PVC resin, optionally a foaming stabilizer, and the chemical blowing agent according to item 28, which preferably does not contain azodicarbonamide, benzenesulfonylhydrazide, and/or p-toluenesulfonylhydrazide.
Item 31. A process for manufacturing a polymer, comprising heating the foamable polymer composition according to Item 29 which comprises the functionalized particulate bicarbonate at a temperature suitable for liberating CO2 gas and melting the polymer during a gelation time at a temperature above glass transition temperature Tg and/or above melting temperature Tm of the polymer which is less than 130 seconds.
Item 32. A foamed polymer obtained by the process of item 31, wherein the polymer is a PVC, a polyurethane, a polyolefin, or a polyamide.
Item 33. A process for manufacturing a PVC polymer, comprising heating the foamable PVC polymer composition according to item 30 which comprises the functionalized particulate bicarbonate and the PVC resin at a temperature suitable for liberating CO2 gas and melting the PVC polymer during a gelation time from 90 seconds to 120 seconds at a temperature from 190 to 210°C, preferably from 200 to 210°C, to provide a foamed PVC polymer, wherein the foamable polymer composition preferably is spread coated on a surface before heating and melting, and wherein the foamed polymer has an expansion ratio of at least 270, preferably at least 280, more preferably at least 300 and/or has a density of less than 0.6 g/cm³, preferably less than 0.55 g/cm³, more preferably at most 0.5 g/cm³.
Item 34. A process for manufacturing a polymer, comprising heating the foamable PVC plastisol composition according to ITEM 30 which comprises the functionalized particulate bicarbonate at a temperature suitable for liberating CO2 gas and melting the PVC resin during a gelation time, wherein said gelation time with the chemical blowing agent comprising the functionalized particulate is less than the gelation time that would be obtained with a chemical blowing agent liberating N2, all other components in the foamable PVC plastisol composition being the same.
Item 35. A foamed PVC obtained by the process of items 33 or 34.

### Definitions

In the present description, wherein an element or composition is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components.

Further, it should be understood that elements and/or features of an apparatus, a process or method described herein can be combined in a variety of ways without departing from the scope and disclosures of the present teachings, whether explicit or implicit herein.

The term "alkali metal bicarbonate", as used herein, refers to alkali metal bicarbonate salts, alkali metal sesquicarbonate salts and combinations thereof.

The term "extrusion" or "extruding", as used herein, refers to a process in which a softened material, herein a paste-like composition as defined below, is forced through a shaped device, e.g., a syringe orifice or a die of an extruder device, in order to obtain a material in form of a powder, or of a certain shape, e.g., filaments or granules. The filaments or granules obtained from the extrusion process can be further milled in one embodiment of the present invention. The term "melt-extrusion" or "melt-extruding" refers to an extrusion process, which would be performed at a temperature above the melting point of the functionalizing agent.

The extrusion process can also be carried out by means of a continuous mixing/extrusion process, wherein the material is mixed and extruded in a low pressure, temperature-controlled, paddle-equipped twin screw instrument. A liquid agent can be sprayed on the material at any point during the process. The temperature applied in the continuous mixing/extrusion process can be in the range of -20 to 300 °C. The residence time can be in the range from 2 to 20 minutes. The rotary speed of the shafts in the paddle-equipped twin screw instrument can be in the range of from 30 to 160 rpm.

Suitable continuous mixing/extrusion processors include processors, which allow mixing, kneading and extruding a homogenous mix of high-viscosity materials. Preferred continuous mixing/extrusion processors include twin screws and paddles that allow thorough and complete mixing, with co-rotating shafts and close clearances between the paddles as well as between the paddles and the barrel walls allowing for uniform mixing, performed in less time than with conventional mixers. Further preferred continuous processors allow high-volume applications with a capacity of from 1 kg to 10 tons per hour.

The term "thermoplastic material" shall mean a polymer that becomes pliable or moldable above a specific temperature, so is capable of flow at high temperatures below the thermal decomposition temperature and returns to a solid state upon cooling. A polymer is a macromolecular compound prepared by reacting (i.e. polymerizing, condensation) monomers of the same or different type, including homo- and copolymers. Thermoplastic materials are made by chain polymerization, polyaddition and / or polycondensation.

The term "functionalized particulate bicarbonate" is to be understood as defining particles which comprise a bicarbonate and an additive, preferably within the same particle. For example, the additive may form a layer or coating on the bicarbonate or the bicarbonate may form a layer or coating on the additive. Alternatively or additionally the additive may be embedded within a matrix of the bicarbonate or vice versa. The particle comprising bicarbonate and additive may be an agglomeration of smaller particles or small particles of one of the components may be agglomerated to a larger particle (or larger particles) of the other component. Preferably, the term "functionalized particulate bicarbonate" does not include a mere mixture of bicarbonate particles and at least one additive whether it be in liquid form or in the form of particles.

The term "functionalizing agent", as used herein, refers to a compound that is capable of improving at least one CO₂ release property of sodium bicarbonate when the additive is formulated with the sodium bicarbonate, relative to the sodium bicarbonate alone (without additive). For example, the functionalizing agent is capable of increasing the CO₂ release beginning temperature and/or the CO₂ release maximum temperature of the functionalized particulate bicarbonate. Preferably, the functionalizing agent is a compound as defined in items 11-15 described above. An example of a "functionalizing agent" in the present application is a polyoxyalkylene compound with a melting point of 20°C or less.

The term "foamed" in connection with the terms "thermoplastic material", "polymer" and "PVC" shall mean such material, polymer, or PVC with a cellular structure which is formed by gas generation from thermal decomposition and/or chemical reaction of a chemical blowing agent during processing.

A "paste-like composition" or "paste-like mixture", as referred to herein, is a composition comprising the alkali metal bicarbonate and the functionalizing agent, wherein the paste-like composition is suitable for being used in an extrusion process. Preferably, the paste-like composition is a paste or a gel. A "paste" or "gel" is a semi-solid suspension, which is moldable if external forces are applied, e.g., external forces that occur during an extrusion process, but keeps its shape in the absence of external forces. The viscosity of the paste-like composition is preferably within a range of 5000 to 25000 mPa·s, more preferably 10000 to 20000 mPa·s as determined by rheological analysis at room temperature (25°C) and a shear rate of 100 s⁻¹. The rheological analysis of the paste-like composition can be carried out using a rotational rheometer (e.g., "RheolabQC" from Anton PAAR).

The term "comprising" includes "consisting essentially of" and "consisting of'.

The term "ppm" means parts per million, expressed by weight (e.g., 1 ppm = 1 mg / kg).

The term "pcr" means parts by weight of resin (e.g., 80 per of additive = 80 g additive per 100 g of resin).

The sign "%" or "wt%" refers to "weight percent" unless specifically stated otherwise.

As used herein "bulk density" refers to loose bulk density and can be determined according to ASTM D7481-09 "method A" unless specifically stated otherwise. Tapped density can also be determined according to ASTM D7481-09 "method A" unless specifically stated otherwise.

The term "exothermic blowing agent" defines a chemical that generates heat during its decomposition. An exothermic blowing agent typically undergoes rapid decomposition in a narrow temperature range. Generally speaking, the exothermic chemical blowing agents are associated as those chemicals giving N₂ as the main blowing gas (> 50 vol% of the generated gas is N₂). Other minor gases though may evolve from the decomposition of the exothermic chemical blowing agent. These other minor gases may include carbon monoxide, also in small amounts (< 5 vol%) of ammonia, and/or CO₂.

The term "endothermic blowing agent" defines a chemical that absorbs heat during its decomposition. An endothermic blowing agent typically has broader decomposition ranges in terms of both temperature and time. Most endothermic chemical blowing agents generate CO₂ as the main blowing gas (> 50 vol% of the generated gas is CO₂).

The CO₂ release properties of the functionalized particulate bicarbonate according to one aspect of the present invention can be determined by performing a thermogravimetric analysis (TGA) of a functionalized particulate bicarbonate sample, measuring the weight loss of the sample in dependence of the temperature. The CO₂ release properties are characterized by the derivate value for weight loss depending on the temperature. The CO₂ release beginning temperature is the temperature where the derivate value for weight loss starts to raise. The CO₂ release maximum temperature is the temperature where the derivate value for weight loss is at maximum. Typically, heating is performed between 30°C and 250°C at a speed of 10 °C/min. Thermogravimetric analysis can be performed for example on an STD Q600 V20.9 Build 20 thermogravimetric analysis instrument (provided by TA Instruments).

A plurality of elements includes two or more elements.

The phrase 'A and/or B' refers to the following selections: element A; or element B; or combination of elements A and B (A+B). The phrase 'A and/or B' is equivalent to at least one of A and B. The phrase 'A and/or B' equates to at least one of A and B.

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

In the present specification, the description of several successive ranges of values for the same variable also comprises the description of embodiments where the variable is chosen in any other intermediate range included in the successive ranges. Thus, for illustration purpose, when it is stated that "the element X is generally at least 10, advantageously at least 15", the present description also includes another embodiment where a new minimum can be selected between 10 and 15, for example: where "the element X is at least 11", or also where: "the element X is at least 13.74", etc.; 11 or 13.74 being values included between 10 and 15. Also for illustration purpose, when it is indicated that "the element X is generally at most 15, advantageously at most 10", the present description also includes another embodiment where a new maximum can be selected between 10 and 15.

In the present specification, when in an embodiment the choice of an element from a group of elements is described, the following embodiments are also explicitly described:
- the choice of two or more elements from the group,
- the choice of an element from a subgroup of elements consisting of the group of elements from which one or more elements have been removed.

The CO₂ release properties of the alkali metal bicarbonate formulation of the present invention can be determined by performing a thermogravimetric analysis (TGA) of a sample of the alkali metal bicarbonate formulation, measuring the weight loss of the sample in dependence of the temperature. The CO₂ release properties are characterized by the derivate value for weight loss depending on the temperature. The CO₂ release beginning temperature is the temperature where the derivate value for weight loss starts to raise. The CO₂ release maximum temperature is the temperature where the derivate value for weight loss is at maximum. Typically, heating is performed between 30°C and 500 °C at a speed of 10 °C/min on a sample of 15 mg of the formulation. Thermogravimetric analysis can e.g., be performed on an STD Q600 V20.9 Build 20 thermogravimetric analysis instrument (provided by TA Instruments).

### DETAILED DESCRIPTION

As mentioned above, the present invention relates to a process for preparing a formulation comprising an alkali metal bicarbonate, wherein said process comprises the steps of:
(a) mixing a functionalizing agent and a particulate alkali metal bicarbonate to obtain a paste-like mixture; and
(b) extruding the paste-like mixture obtained in step (a) at an extrusion operating temperature, wherein the functionalization agent has a melting temperature less than the extrusion operating temperature.

Preferably, the paste-like composition undergoing extrusion comprises at least 30%, more preferably at least 50%, even more preferably at least 60%, even more preferably at least 65%, even more preferably at least 70%, or at least 80% by weight of the alkali metal salt.

Preferably, at steps (a1) or (a2) or (a3) of the process of the present invention, the weight ratio of functionalizing agent is at least 20, more preferably at least 25, even more preferably at least 30, and even more preferably at least 35 parts per 100 parts of alkali metal salt. In one embodiment, the ratio of the weight of the functionalizing agent to the weight of the alkali metal salt in the composition undergoing extrusion is greater than 0.25, or at least 0.3, or at least 0.4, or at least 0.5.

Preferably, at step (b) the formulation is in the form of a powder, filaments or granules, comprising alkali metal salt particles and functionalizing agent.

Preferably, the process of the present invention comprises, after step (b), the step: (c) cooling the formulation to below the melting temperature of the functionalizing agent to obtain a cooled formulation in form of a powder, or cooled filaments or cooled granules of the alkali metal salt and the functionalizing agent.

The melting point of the functionalizing agent is preferably at most 20°C, preferably at most 15°C, more preferably at most 10°C.

Preferably, the paste-like composition comprises alkali metal bicarbonate and 0.1 - 60 % by weight, or 0.5 - 60 % by weight, or 1 - 60 % by weight, or 3 - 60 % by weight, or 5 - 60 % by weight, or 7 - 60 % by weight, or 10 - 60 % by weight, or 15 - 60 % by weight, or 17% - 60%, or 20% - 57%, or even 23% - 54% by weight of the functionalizing agent thereof, based on the total weight of the composition undergoing extrusion.

If present in an amount of less than 0.1 % by weight, or less than 0.3 % by weight, or less than 0.5 % by weight, or less than 1 % by weight, or less than 3 % by weight, or less than 5 % by weight, or less than 7% by weight, or less than 10 % by weight, or less than 15 % by weight, or even less than 17% by weight, the functionalizing agent is less efficient in terms of the provision of a paste-like composition. More than 60% by weight of the functionalizing agent in the paste-like composition is disadvantageous for cost reasons.

Preferably, the alkali metal bicarbonate used at step (a) is made of particles, and said particles have a medium particle size (D50 in weight) of less than 300 µm, more preferably less than 200 µm, even more preferably less than 130 µm. The particles typically have a medium particle size (D50 in weight) of at least 10 µm, or at least 20 µm, or at least 30 µm, or at least 40 µm, or at least 50 µm. The medium particle size (D50 in weight) of the particles may range from 10-300 µm, or 20-200 µm, or 30-150 µm, or 50-130 µm. The particle size distribution can be determined according to ISO 13320. For example, the weight-average diameter D50 value can be measured by laser diffraction and scattering on a Malvern Mastersizer S particle size analyser using an He-Ne laser source having a wavelength of 632.8 nm and a diameter of 18 mm, a measurement cell equipped with a backscatter 300 mm lens (300 RF), and MS 17 liquid preparation unit, and an automatic solvent filtration kit ("ethanol kit") using ethanol saturated with the alkali metal salt (wet method).

Preferably, the alkali metal bicarbonate is in particular sodium bicarbonate or sodium sesquicarbonate. Particularly preferred is sodium bicarbonate.

Preferably, a third compound selected among a mineral compound, an organic compound, and mixtures thereof, is added to the alkali metal salt or to the functionalizing agent to obtain the paste-like composition.

In some embodiments, the mineral compound may be silica, sodium silicate or sodium silicate hydrate, calcium carbonate, and/or wherein the organic compound is citric acid.

Preferably, at step (a) the weight ratio of functionalizing agent and alkali metal bicarbonate is at most 100 parts, preferably at most 70 parts, more preferably at most 60 parts, even more preferably at most 55 parts of the functionalizing agent per 100 parts of alkali metal salt.

In the process for preparing an alkali metal bicarbonate formulation by extrusion, all suitable extrusion procedures as known in the art can be used. Preferably, the extrusion is performed on a screw extruder, e.g., a single screw extruder or a twin screw extruder.

Preferably, the cooled filaments or granules are in a step (d) subsequently cut into pieces or grinded at a temperature below the melting temperature of the functionalizing agent.

The process of the present invention allows the control of the shape and size of the resulting formulation, which can be obtained as filaments or granules as described above. The ability to control shape and size of the alkali metal bicarbonate formulation of the present invention is advantageous with respect to the various applications of alkali metal bicarbonates as known in the art.

The present invention furthermore relates to an alkali metal bicarbonate formulation obtainable by an extrusion process as described above, wherein the formulation comprises alkali metal bicarbonate and a functionalizing agent, and wherein the formulation is in the form of a powder, filaments or granules, wherein the granules have a spherical, cubic or cylindrical shape. Preferably, the filaments or granules obtained from the process of the present invention have a diameter of at least 100 µm, preferably of at least 200 µm, more preferably of at least 500 µm, even more preferably of at least 1 mm.

Powders obtained from the extrusion process or by further milling the filaments or granules obtained from the extrusion process comprise particles with a medium particle size (D50 in weight) in the range of 1 µm to 2 mm, preferably from 10 µm to 500 µm. The particle size distribution can be determined according to ISO 13320.

The present invention furthermore relates to an alkali metal bicarbonate formulation (preferably obtainable by an extrusion process as described herein) comprising sodium bicarbonate and a functionalizing agent as described herein. The formulation is preferably in the form of a powder, filaments or granules as described herein, wherein the granules have a spherical, cubic or cylindrical shape.

Preferably, the formulation comprises at least 40% by weight of an alkali metal bicarbonate, less than 10% by weight of an alkali metal carbonate, less than 10% by weight of water, and 0.1 - 60 % by weight, or 0.5 - 60 % by weight, or 1 - 60 % by weight, or 3 - 60 % by weight, or 5 - 60 % by weight, or 7 - 60 % by weight, or 10 - 60 % by weight, or 15 - 60 % by weight, or 17% - 60%, or 20% - 57%, or even preferably 23% - 54% by weight of a polyoxyalkylene compound or a derivative thereof as at least one functionalization agent.

More preferably, the formulation comprises at least 45%, even more preferably at least 50 %, even more preferably at least 60%, even more preferably at least 65%, even more preferably at least 70% by weight of the alkali metal bicarbonate, based on the total amount of the formulation.

Preferably, the formulation is in the form of filaments or granules having a diameter of at least 100 µm, preferably of at least 200 µm, more preferably of at least 500 µm, even more preferably of at least 1 mm.

Preferably, the formulation is in the form of filaments or granules having a diameter of at most 100 mm, preferably of at most 50 mm, more preferably of at most 5 mm, even more preferably of at most 2 mm. The length-to-diameter ratio of the filaments or granules may range from about 0.4 to about 4. Preferably, the alkali metal bicarbonate in the formulation of the present invention is sodium bicarbonate or sodium sesquicarbonate salt. Particularly preferred is sodium bicarbonate.

The formulation obtainable by the process of the invention shows an improved expansion ratio of a polymer foam when used in a spray coating of a PVC foam.

The formulation obtainable from the processes of the invention also show excellent CO₂ release properties. CO₂ release of the formulation obtained from the process of the present invention begins at a temperature of at least 120 °C, preferably at a temperature of at least 125 °C, more preferably at a temperature of at least 130 °C, even more preferably at a temperature of at least 135 °C, and particularly preferably at a temperature of at least 140 °C, as determined by the TGA method described above. The CO₂ release typically has its maximum at a temperature of at least 150 °C, preferably at a temperature of at least 155 °C, more preferably at a temperature of at least 160 °C, even more preferably at a temperature of at least 165 °C, and particularly preferably at a temperature of at least 170 °C, as determined by the TGA method described above.

The advantageous properties of the formulation as described above and as obtainable by the process of the invention make it possible to envisage various applications for this alkali metal bicarbonate formulation. The present invention therefore further relates to the use of the formulation obtainable from the process described above as detergent, as blowing or foaming agent for polymers, as agent for pharmaceutical applications, as exfoliating agent, as anti-parasitic agent, as cosmetic agent such as deodorizing agent, as leavening agent for food and feed, as agent for flue gas cleaning, as food and feed supplement additive or food and feed pH buffer, in particular for aquatic animals or for fish.

### USE OF THE FUNCTIONALIZED PARTICULATE BICARBONATE

The present invention further relates to the use of the herein described functionalized particulate bicarbonate formulation as chemical blowing agent for foaming
- a thermoplastic polymer, for example PVC plastisol; or
- a polymer resin in an extrusion process.

### CHEMICAL BLOWING AGENT

The present invention further relates to a chemical blowing agent for foaming
- a thermoplastic polymer; or
- a polymer resin in an extrusion process.

Thus, another aspect of the invention provides a chemical blowing agent for foaming a thermoplastic polymer which comprises the functionalized particulate bicarbonate as described in the various embodiments herein, wherein the functionalized particulate bicarbonate contains at least one agent as described in the various embodiments herein.

In some embodiments, the chemical blowing agent for foaming a thermoplastic polymer comprises a functionalized particulate bicarbonate having a particle size D50 of 1000 nm or less.

In alternate embodiments, the chemical blowing agent for foaming a thermoplastic polymer comprises a functionalized particulate bicarbonate having a particle size D50 more than 1 micron and up to 250 µm, preferably up to 100 µm, more preferably up to 60 µm, yet more preferably up to 40 µm, or up to 30 µm, or up to 25 µm.

The agent in the functionalized particulate bicarbonate is as defined in the various embodiments described above.

Any particular embodiments for the functionalized particulate bicarbonate and the agent(s) used for its functionalization described herein are applicable here.

In some embodiments, the chemical blowing agent does not contain a compound which liberates nitrogen gas during heating.

In some embodiments, the chemical blowing agent does not contain a compound which liberates ammonia during heating.

In preferred embodiments, the chemical blowing agent is an endothermic chemical blowing agent comprising the functionalized particulate bicarbonate as described in the various embodiments herein.

In preferred embodiments, the chemical blowing agent does not contain an exothermic blowing agent.

In some embodiments, the chemical blowing agent comprises the functionalized particulate bicarbonate and further comprises a second compound as another blowing agent.

The second compound is preferably an endothermic blowing agent.

The second compound preferably can liberate CO2 upon heating. This second compound preferably increases the CO2 generation which is already formed by the decomposition of the functionalized particulate bicarbonate upon heating.

This CO2-liberating second compound acting as blowing agent may be a carboxylic or polycarboxylic acid, derivative thereof (such as esters), or salts thereof.

Suitable carboxylic acids include those of the formula: HOOC--R--COOH where R is an alkylene group of 1 to about 8 carbon atoms which may also be substituted by one or more hydroxy groups or keto groups and may also contain unsaturation. Also included are esters, salts and half salts.

A preferred CO2-liberating second compound acting as blowing agent may include at least one of:
- fumaric acid,
- tartaric acid, or
- citric acid, citrates (such as sodium hydrogen citrate, disodium citrate), or esters of citric acid.

Esters of citric acid may include tributyl citrate, triethyl citrate, tri-C12-13 alkyl citrate, tri-C14-15 alkyl citrate, tricaprylyl citrate, triethylhexyl citrate, triisocetyl citrate, trioctyldodecyl citrate and triisostearyl citrate, isodecyl citrate and stearyl citrate, dilauryl citrate, and/or ethyl citrates (mixture of tri-, di- and monoesters), preferably tributyl citrate, triethyl citrate, isodecyl citrate, or triethylhexyl citrate.

A more preferred CO2-liberating second compound acting as endothermic blowing agent comprises or consists of citric acid, esters therof, or salts thereof. FUNCTIONALIZED SECOND COMPOUND IN BLOWING AGENT COMPOSITION

It is also envisioned that the CO2-liberating second compound in the blowing agent composition which supplements CO2 generation may also be in a functionalized particulate form. This functionalized particulate second compound would comprise an agent as described herein in relation to the functionalized particulate bicarbonate. This functionalization of the particulate second compound may also use an extrusion technique as described above in relation to the making of the functionalized particulate bicarbonate.

In some embodiments, the endothermic blowing agent comprises, or consists essentially of, or consists of:
- the functionalized particulate bicarbonate, as described herein in the various embodiments; and
- a functionalized particulate carboxylic or polycarboxylic acid, derivative thereof (such as esters), or salts thereof.

In particular embodiments, the endothermic blowing agent comprises, or consists essentially of, or consists of:
- the functionalized particulate bicarbonate, as described herein in the various embodiments; and
- a functionalized particulate carboxylic or polycarboxylic acid, derivative, or salt thereof, selected from the group consisting of: fumaric acid, tartaric acid, citric acid, salts thereof (such as sodium hydrogen citrate, disodium citrate), esters thereof, and any combination thereof.

In some embodiments, the chemical blowing agent for foaming a thermoplastic polymer comprises a functionalized particulate bicarbonate and a functionalized particulate second compound (e.g., functionalized carboxylic or polycarboxylic acid, derivative, or salt thereof), both having a particle size D50 of 1000 nm or less.

In alternate embodiments, the chemical blowing agent for foaming a thermoplastic polymer comprises a functionalized particulate bicarbonate and a functionalized particulate second compound (e.g., functionalized carboxylic or polycarboxylic acid, derivative, or salt thereof), both having a particle size D50 more than 1 micron and up to 250 microns, preferably up to 100 microns, more preferably up to 60 microns, still more preferably up to 40 microns or up to 30 microns.

In yet alternate embodiments, the chemical blowing agent for foaming a thermoplastic polymer comprises a functionalized particulate bicarbonate having a particle size D50 of 1000 nm or less and a functionalized particulate second compound (e.g., functionalized carboxylic or polycarboxylic acid, derivative, or salt thereof) having a particle size D50 more than 1 micron and up to 250 microns, preferably up to 100 microns, more preferably up to 60 microns, still more preferably up to 40 microns or up to 30 microns.

In embodiments where the endothermic blowing agent comprises the functionalized particulate bicarbonate and the functionalized particulate second compound (e.g., functionalized carboxylic or polycarboxylic acid, derivative, or salt thereof), the method for making such blowing agent may contain the following steps:
- A/ making the functionalized particulate bicarbonate using a first agent (wherein the first agent is selected from those defined herein); separately making the functionalized particulate second compound using a second agent (wherein the second agent is selected from those defined herein); mixing the functionalized particulate bicarbonate and the functionalized particulate second compound to make the endothermic blowing agent (so long as one of the first and second agents is the polyoxyalkylene agent); or
- B/ mixing the particulate bicarbonate and the particulate second compound before functionalization to make a non-functionalized particulate mixture; and functionalizing the non-functionalized particulate mixture using at least one agent (comprising at least the polyoxyalkylene agent and optionally one or more additional functionalization agents as defined herein) to make the endothermic blowing agent.

In the method A/, the first and second agents may be the same or may be different. The techniques to make the functionalized particulate bicarbonate and the functionalized particulate second compound may be the same or may be different.

In the method B/, the agent and the technique for functionalization of the particulate bicarbonate and the particulate second compound is generally the same, thus resulting in less flexibility in the making of the endothermic blowing agent. However this method would be more cost effective.

### FOAMABLE POLYMER COMPOSITION

Another aspect of the present invention relates to a foamable polymer composition comprising
a) a polymer;
b) the functionalized particulate bicarbonate used as chemical blowing agent for foaming; and
c) at least one polymer additive.

The foamable polymer composition may optionally comprise a functionalized particulate second compound used as supplemental chemical blowing agent for foaming (as described herein).

The foamable polymer composition may optionally comprise a foam stabilizer, such as a silicone based foam stabilizer.

The amount of the polymer in the foamable polymer composition typically ranges between about 10 wt % (or 20 wt%) and about 90 wt % based on the total weight of the foamable polymer composition. The amount of polymer can be selected according to the desired final characteristic of the foamable polymer composition.

In one preferred embodiment according to the present invention, the foamable polymer composition is in the form of a plastisol. The term "plastisol" relates to a suspension of polymer particles in a liquid plasticiser.

Preferably, the plastisol is a suspension of polyvinyl chloride particles in a liquid plasticizer. The choice of the plasticizer is not particularly limited and, therefore, commonly employed plasticizers, such as dioctylphtalate or 1,2-cyclohexyldicarbonic acid diisononyl ester can be used for this purpose.

The terms "polyvinyl chloride" intend to designate vinyl chloride homopolymers as well as copolymers of vinyl chloride with other ethylenically unsaturated monomers which are either halogenated (chloroolefins like vinylidene chloride; chloroacrylates; chlorinated vinylethers) or non halogenated (olefins like ethylene and propylene; styrene; vinylethers like vinyl acetate) monomers; as well as vinyl chloride copolymers with acrylic and methacrylic acids; esters, nitriles and amides. Vinyl chloride homopolymers and vinyl chloride copolymers containing 50-99 weight %, preferably 60-85 weight % of vinyl chloride are preferred.

The amount of the plastisol in the foamable polymer composition typically ranges between about 20 wt % and about 90 wt % based on the total weight of the foamable polymer composition. The amount of plastisol can be selected according to the desired final characteristic of the foamable polymer composition.

The amount of the functionalized particulate bicarbonate in the foamable polymer composition typically ranges from 5 to 15 parts per 100 parts by weight of polymer. For example, for a foamable PVC polymer composition, the amount of the functionalized particulate bicarbonate in the foamable PVC polymer composition typically ranges from 5 to 15 parts per 100 parts by weight of PVC resin, preferably from 6 to 12 parts per 100 parts by weight of PVC resin; more preferably from 7 to 11 parts per 100 parts by weight of PVC resin or from 8 to 10 parts per 100 parts by weight of PVC resin.

The foamable polymer composition of the present invention may contain further components, for instance, foam stabilizers; air release agents; fillers or extenders (e.g., CaCO₃ as a filler), such as carbon black; other polymers and oils; curing agents, such as sulfur compounds and various chemicals that act as a part of a curing system, such as zinc oxide; antistatic agents; biocides; colorants; coupling agents; fibrous reinforcements; flame retardants; fungicides; heat stabilizers; lubricants; mold release agents; plasticizers (e.g., DINP = di-isononyl phtalate); preservatives; processing aids; slip agents; ultraviolet stabilizers; viscosity depressants; and any other ingredient that may be a desirable component of the resulting foamed polymer.

A preferred foam stabilizer may include a silicone based foam stabilizer, such as BYK 8020 for PVC plastisol.

In some embodiments, the foamable composition does not contain another blowing agent other than the functionalized particulate bicarbonate.

In other embodiments, the foamable composition does not contain any blowing agent which is exothermic. In particular embodiments, the foamable composition does not contain a blowing agent which liberates nitrogen gas and/or ammonia. Examples of blowing agents which liberate nitrogen gas are exothermic blowing agents such as azodicarbonic acid diamide (azodicarbonamide, ADC, ADCA, CAS No. 123-77-3), the sulfonhydrazides 4,4'-oxybis(benzenesulfonylhydrazide) (OBSH, CAS No. 80-51-3) and p-toluenesulfonylhydrazide, (TSH, CAS No. 1576-35-8).

In preferred embodiments, the foamable polymer composition does not contain azodicarbonamide.

In alternate or additional preferred embodiments, the foamable polymer composition does not contain benzenesulfonylhydrazide.

In alternate or additional embodiments, the foamable polymer composition does not contain p-toluenesulfonylhydrazide.

### PROCESS FOR PREPARING THE FOAMABLE COMPOSITION

Another aspect of the present invention relates to a process for preparing the foamable polymer composition as described above, wherein the process comprises:
- mixing the components of the foamable polymer composition as provided herein, wherein a component of the foamable polymer composition is the functionalized particulate bicarbonate.

The process for preparing the foamable polymer composition can be carried out in conventional equipment, for example made of Austenitic Stainless Steel (304L-316L etc). The process can also be carried out in non-metallic materials like plastics, glass and ceramics for chemical use.

Preferably, the mixing step in the process is carried out under continuous mixing. Because the foamable polymer composition has a relatively high viscosity, a powerful mixing is required for obtaining a homogeneous foamable polymer composition. Moreover, because the blowing effect already starts taking place during the mixing, the speed of mixing should be sufficiently high in order to achieve a good homogenisation within a short period of time. Preferably, the homogenisation is achieved within less than about 20 seconds during the mixing step(s) of the process. The selection of the mixing conditions depends upon the specific characteristics of the equipment. The mixing step(s) of the process for preparing the foamable polymer composition can be carried out at any suitable temperature as in conventional foam production, the process can for example be carried out at relatively low temperatures (ambient) ranging between about 0°C and about 30°C, for instance at about 20-25°C.

For example, a PVC plastisol composition may be prepared by mixing
- the functionalized particulate bicarbonate in powder form as described herein,
- at least one plasticizer,
- at least one polyvinyl chloride polymer,
- optionally a foam stabilizer; and
- optionally one or more polymer additives such an inorganic filler.

A preferred foam stabilizer may include a silicone based foam stabilizer, such as BYK 8020 for PVC plastisol.

The components of the PVC plastisol composition may be dispersed on a high speed mixer and then de-aerated under vacuum.

The PVC plastisol composition may optionally comprise a functionalized particulate second compound used as supplemental chemical blowing agent for foaming (as described herein). The functionalized particulate second compound may be a functionalized particulate carboxylic or polycarboxylic acid, derivative, or salt thereof. The functionalized particulate second compound may be selected from the group consisting of: fumaric acid, tartaric acid, citric acid, salts thereof (such as sodium hydrogen citrate, disodium citrate), esters thereof, and any combination thereof.

### PROCESS FOR PREPARING A FOAMED POLYMER

A further aspect of the present invention relates to a process for preparing a foamed polymer, wherein the above described foamable polymer composition is heated. Thus, the process for preparing a foamed polymer can comprise the following step:
- mixing the components of the foamable polymer composition as provided herein; and
- heating the foamable polymer composition obtained from mixing .

Preferably, the heating step is carried out immediately after the completion of the mixing step.

The process for preparing a foamed polymer may include a shaping step such as extrusion or spreading. Preferably, the heating step is carried out immediately after the completion of the mixing and shaping steps.

The heating step can be carried out at a temperature from about 120°C and up to about 220°C, or from about 120°C and up to about 210°C, or from about 120°C and up to about 200°C, depending on the resin and the composition of plastisol.

The time of heating in the heating step depends on the formulation of plastisol, shape of the material, temperature and the like. In the a process for preparing a foamed polymer from the above-mentioned foamable polymer composition, the gelation time during the heating period in the presence of the functionalized particulate bicarbonate as the blowing agent is less than that in the presence of azodicarbonamide as the blowing agent (while all other components remain the same).

When foamable polymer composition comprises the functionalized particulate bicarbonate, the gelation time at temperature above glass transition temperature Tg and/or above melting temperature Tm of the polymer preferably is less than 180 seconds, such as less than 125 seconds.

Regarding a PVC plastisol, the resulting liquid PVC paste (plastisol) can be spread coated at a certain thickness on a surface (for example, a paper, in particular a silicone paper) and heated in an oven (e.g., Thermosol Werner Mathis) set at a curing (gelation) temperature (generally between 150°C and 210°C or 200°C, such as from 180°C to 210 °C, or from 185°C to 210°C, or from 190°C to 210°C, or from 200°C to 210°C) for a time of 130 seconds or less, such as for a time of 120 seconds to 30 seconds, preferably for a time of 120 seconds to 60 seconds, more preferably for a time of 120 seconds to 90 seconds.

For some embodiments of a process for manufacturing a PVC polymer, when the foamable polymer composition is heated, the temperature suitable for liberating CO2 gas from the functionalized particulate sodium bicarbonate and melting a PVC polymer may be from 190 to 210°C, preferably from 200 to 210°C, during a gelation time from 90 seconds to 120 seconds at a temperature to provide a foamed PVC polymer.

When the foamable polymer composition is spread coated on a surface before heating and polymer melting, the foamed polymer may have an expansion ratio of at least 270, preferably at least 280, more preferably at least 300 and/or has a density of less than 0.6 g/cm³, preferably less than 0.55 g/cm³, more preferably at most 0.5 g/cm³. The expansion ratio is calculated based on the ratio of a final thickness over an initial thickness of a spread coated layer of the foamable polymer composition as that layer gets heated in an oven.

Foamed polymeric products produced using the blowing agent and the above discussed foamable polymer composition can be made by processes that involve extrusion, calendering, injection molding, coating, expansion casting or rotational molding.

### FOAMED POLYMER

A further aspect of the present invention relates to a foamed polymer, wherein the foamed polymer is obtainable from the foamable composition as described above.

In one embodiment of the invention, the foamed polymer is a flexible foamed polymer. In this embodiment, the foamed or extruded polymer is preferably flexible polyvinyl chloride and can be advantageously used
- for flooring applications;
- for production of wall paper foam based;
- as artificial leather; or
- as technical foam.

The functionalized particulate bicarbonate is preferably used as a blowing agent for foamed or extruded polymers (such as foamed PVC or polyurethanes; extruded PVC, polyolefins, polyamides), preferably used as an endothermic blowing agent. Non-limiting examples of polymers are polyvinyl chloride (PVC), polyurethanes, polyolefins (PO, PE, PP), styrenics (PS, ABS, ASA, SAN), engineering resins, polyphenylene oxide, polyamides, polyimides, and natural and synthetic rubber such as nitrile butadiene rubber (NBR) or chloroprene rubber (CR).

When the foaming agent contains the particulate bicarbonate without the polyoxyalkylene compound, the resulting foamable polymer composition has a higher viscosity than a foamable polymer composition containing a different chemical foaming agent: azodicarbonamide. Such high viscosity of the foamable polymer composition (with only particulate bicarbonate) results in a foamed polymer composition which is denser than a foamed polymer made with azodicarbonamide as foaming agent. The higher viscosity obtained with particulate non-functionalized bicarbonate used as the chemical foaming agent generally results in poor density (>0.6 g/ml) and low thickness (< 2 mm) of a PVC sheet made from the foamable composition.

On the other end, the addition of the polyoxyalkylene agent to functionalize particulate sodium bicarbonate used in the chemical blowing agent can provide a foamable polymer composition with a much reduced viscosity compared to a foamable polymer composition with non-functionalized particulate bicarbonate. An acceptable viscosity for the foamable composition may range from 9000 to 23000 mPa sec at 20°C at a shear rate of 3.14 s⁻¹ or range from 11000 to 21000 mPa sec at 20°C at a shear rate of 10.2 s⁻¹. The lower viscosity obtained with functionalized particulate bicarbonate as chemical blowing agent provides a PVC sheet made from the foamable composition with a good density (≤ 0.6 g/ml, preferably ≤ 0.5 g/ml) and a spread coat thickness ≥ 2 mm. With a reference thickness of the non-foamed material of 0.75 mm this corresponds to an expansion ratio of about ≥270.

When the foamable PVC polymer composition comprising the functionalized particulate bicarbonate is spread coated on a surface before heating and polymer melting, the foamed polymer may have an expansion ratio of at least 270, preferably at least 280, more preferably at least 300. The expansion ratio is calculated based on the ratio of a final thickness over an initial thickness of a spread coated layer of the foamable polymer composition as that layer gets heated in an oven. The expansion ratio may be from 270 up to 450, or from 280 up to 445, or from 290 up to 440, or from 300 up to 440.

In some embodiments, the foamed polymer is a PVC foam with a density of less than 0.65 g/cm³ or of less than 0.6 g/cm³, preferably less than 0.58 g/cm³, more preferably at most 0.55 g/cm³, most preferably at most 0.5 g/cm³ or at most 0.45 g/cm³. In some embodiments in which a PVC foam is made from a foamable PVC composition containing a functionalized particulate bicarbonate with at least one agent, the PVC foam has a density from 0.3 to 0.65 g/cm³, preferably a density from 0.30 to 0.58 g/cm³, more preferably a density from 0.31 to 0.5 g/cm³ or even a density from 0.32 to 0.45 g/cm³.

The agent in the functionalized particulate bicarbonate preferably comprises a polyoxyethylene compound (like BIK3155, polyethylene glycol e.g., PEG400, PPG) with a melting point equal to or less than 20°C. Additional functionalized agent may be selected from the group consisting of beeswax, carnauba wax, glycerol mono stearate, poly(meth)acrylate, epoxidized soybean oil, arabic gum, linoleic acid, maltodextrin, polyvinyl alcohol, lauric acid, rosin acid, starch, stearic acid, , leucine, and any combination of two or more thereof.

The present invention is based on the discovery of the effects of the agent mentioned in the present specification, for which the different variants of the method and/or of the product obtained by said variants of the method are described in more detail below.

The following examples are given by way of non-limiting illustration of the present invention, and variations thereof that are readily accessible to a person skilled in the art.

### Examples

### Extrusion-Mixing

The extrusion-mixing process was performed continuously in a UCP25 instrument from HASLER Group which had an inlet point and paddles. Sodium Bicarbonate particles were loaded at the UCP25 inlet point from 1 to 2 kg/h. The functionalization agent was loaded a few centimeters after the main inlet point, from 0.1 to 1 kg/h. Rotary speed of the paddles was 50 rpm. Instrument temperature was kept at room temperature.

### Milling after Extrusion-Mixing

The functionalized sodium bicarbonate product exiting the extrusion-mixing process was continuously injected at the top of a UPZ100 mill from Hosokawa Alpine at a loading rate of from 0.5 to 10 kg/h. The mill has a rotor speed selected between 10,000 and 17,000 rpm and the mill was operated at room temperature.

### Preparation of PVC plastisol

A method for making a PVC plastisol may generally follow the following steps:
- the weight of the PVC resin is measured in a 2-liter stainless steel pot and the rest of the formula is weighed apart;
- The stainless steel pot is placed under a hydraulic mixer (Pendraulik) with a deflocculating shear blade (rotor blade diameter 70 mm)
- Stirring at 250 rev / min during addition of the mineral filler, plasticizer and blowing agent
- Stirring at 4200 rev / min for 45 seconds, once the powders are suspended (temperature about 40-50 ° C, if time higher agitation, T may rise to 60-70 ° C)
- Vacuum preparation to strip air bubbles. When the level of preparation goes up into the beaker, the beaker may be tapped on the bench to remove bubbles faster.
- When the level of preparation is stable in the presence of the vacuum, count 5 minutes before cutting vacuum and then end air stripping.
- To avoid foaming, optionally adding a foam stabilizer (such as from BYK provider)
- temperature setting in a Werner Mathis oven at a preset temperature, usually T = 190, 200 or 210° C
- A paper (silicone paper in examples 1-8 and regular paper (from Claire Fontaine) in examples 9-13) is installed and heated for 10 seconds to remove residual water from the paper
- Plastisol mixture is spread on the paper in a thickness of 750 microns
- The PVC plastisol is heated up to 2 minutes for gelation (usually 60s, 90s, 120s),
- Wait until the plastisol is cooled for remove it from the paper.

The following chemicals were used in the examples:

| | | |
|---|---|---|
| SolVin® 367 NF | PVC resin | of Inovyn |
| SolVin® 266 SC | PVC resin | of Inovyn |
| Durcal® 15 | CaCO₃ | of Omya |
| Palatinol® | (DINP) di-isononyl phthalate (C₂₆H₄₂O₄) | of BASF |
| Disperplast 1150 | | of BYK |
| Viscobyk® 4040 | | of BYK |
| BYK 3155 | | of BYK |
| BYK 8070 | | of BYK |
| Genitron® SCE | (70% azodicarbonamide + 30% kicker) | of Lanxess |
| PEG400 | | of Sigma Aldrich |
| PFG4000 | | of INEOS Oxide |

### Example 1 (not in accordance with invention)

The PVC Plastisol composition of Example 1 was prepared by using azodicarbonamide as the blowing agent. The other components of the plastisol of Example 1 were at least one polyvinyl chloride polymer, and optionally one or more polymer additives such an inorganic filler.

The specific components and amounts as mentioned in Table 1 were chosen.

In each example, the components were dispersed on a high speed mixer and them mixed and de-aerated under vacuum.

The resulting liquid PVC paste (plastisol) of Example 1 was spread coated at a thickness of about 0.75 mm on silicone paper and heated in a Thermosol Werner Mathis oven set at 185 °C for 120 seconds.

The surface and structure of the foam was assessed visually. The expansion rate was the ratio of the difference between the final thickness of the foamed product after Werner Mathis oven heating and the initial thickness of the spread coated layer (here about 0.75 mm) before it passed the Werner Mathis oven heating, over the initial thickness. The expansion ratio was calculated as the ratio of the final thickness of the foamed product over the initial thickness of the spread coated layer (here about 0.75 mm). The results are provided in **TABLE 1,** where "PCR" means parts by weight of PVC resin.

**TABLE 1**

| | **Example** | **1** |
|---|---|---|
| | | **PLASTISOL BASE AZO** |
| | | **PCR** |
| **PVC resin** | **SolVin 367 NF** | 89.9 |
| | **SolVin 266 SC** | 10.1 |
| **Inorganic filler** | **Durcal 15 (CaCO₃)** | 80.1 |
| **Plastisizer** | **Foam stabilizer (DINP)** | 58.1 |
| **Wetting and dispersing agent of TiO₂ and ZnO** | **Disperplast 1150** | 0.3 |
| **Viscosity Modifiers** | **Viscobyk 4040** | 3.2 |
| **Prevent the foam release agent** | **BYK 3155** | 0.3 |
| **Foam stabilizer** | **BYK 8070** | - |
| | **TiO₂** | 2.3 |
| **Blowing agent** | **Azodicarbonamide** | 2.2 |
| | **ZnO** | 1 |
| **Conditions/Results** | **Pre-gelification phase** | 30 sec at 90°C |
| | **Gelification phase** | 2 min at 185°C |
| | **Coating appearance** | Very smooth |
| | **Thickness (in mm)** | 2.4 |
| | **Expansion rate (%)** | 220 |
| | **Expansion ratio (%)** | 320 |

### Examples 2-5 (not in accordance with invention)

For Examples 3-5, PVC Plastisol compositions were prepared by using a non-functionalized sodium bicarbonate in powder form as the blowing agent. The non-functionalized sodium bicarbonate in powder form was mixed in the presence at least one plasticizer, at least one polyvinyl chloride polymer, and optionally one or more polymer additives such an inorganic filler. A PVC Plastisol composition of Example 2 was prepared by using azodicarbonamide as the blowing agent. The other components of the plastisol of Example 2 were the same as those used in Examples 3-5. The specific components and amounts as mentioned in **TABLE 2** were chosen. "PCR" in **TABLE 2** means parts by weight of resin. In each example 2-5, the components were dispersed on a high speed mixer and them mixed and de-aerated under vacuum.

The resulting liquid PVC pastes (plastisols) of Examples 2-5 were in each case spread coated at a thickness of about 0.75 mm on silicone paper and heated in a Thermosol Werner Mathis oven set with a gelation period at 185 °C for 120 seconds.

Examples 3 to 5 with non-functionalized bicarbonates as foaming agent gave poor expansion results compared to the Example 2 using azodicarbonamide as the blowing agent. After gelling, PVC plastisols surfaces of Examples 3 to 5 had a very granular appearance which was a sign of surface coalescence of gas bubbles in the polymer melt.

**TABLE 2**

| Examples | | **2** | **3** | **4** | **5** |
|---|---|---|---|---|---|
| | | **A** | **B** | **C** | **D** |
| | | **PLASTISOL BASE AZO** | **Bicar 0/6P** | **Bica 0/50** | **Bicar 0/50** |
| | | **PCR** | **PCR** | **PCR** | **PCR** |
| **PVC resin** | **PVC resin** | 100 | 100 | 100 | 100 |
| **Inorganic filler** | **CaCO₃** | 40 | 40 | 40 | 40 |
| **Plasticizer** | **Palatinol N (DINP)** | 65 | 65 | 65 | 65 |
| | **MB10** | | | | 20 |
| **Blowing Agent** | **Azodicarbonamide + Kicker ^{(d)}** | 4.5 | 1.1 | 1.1 | 1.1 |
| | **Bicar 0/50 crushed ⁽¹⁾** | X | | 8 | 8 |
| | **Bicar 0/6P ⁽²⁾** | X | 6 | | |
| **Result** | **Coating appearance** | Very smooth | Very granular | Very granular | Very granular |

| | | | | | |
|---|---|---|---|---|---|
| ⁽¹⁾ Bicar 06/P trade product of Solvay ⁽²⁾ Bicar 0/50 crushed in Alpine 01 - d₁₀ = 3.4 µm d₅₀ = 17.8 µm d₉₀ = 39.6 µm | | | | | |

### Example 6 (not in accordance with invention)

The PVC Plastisol composition of Example 6 was prepared by using azodicarbonamide as the blowing agent. The other components of the plastisol of Example 6 were at least one plasticizer, at least one polyvinyl chloride polymer, and optionally one or more polymer additives such an inorganic filler. The specific components and amounts as mentioned in **TABLE** 3 are chosen.

In each example, the components were dispersed on a high speed mixer and them mixed and de-aerated under vacuum.

The resulting liquid PVC paste (plastisol) of Example 6 was spread coated at a thickness of about 0.75 mm on silicone paper and heated in a Thermosol Werner Mathis oven set at 185°C for 120 seconds for Example 6.

The surface and structure of the foam was assessed visually. The expansion rate was the ratio of the difference between the final thickness of the foamed product after Werner Mathis oven heating and the initial thickness of the spread coated layer (here about 0.75 mm) before it passed the Werner Mathis oven heating, over the initial thickness. The expansion ratio was calculated as the ratio of the final thickness of the foamed product over the initial thickness of the spread coated layer (here about 0.75 mm). The results are provided in **TABLE 3,** where "pcr" means parts by weight of PVC resin.

**TABLE 3**

| Example | | **6** |
|---|---|---|
| | | **Test 1** |
| | **TEST** | **PLASTISOL BASE AZO** |
| | | **PCR** |
| **PVC resin** | **SolVin 367 NF** | 89.9 |
| | **SolVin 266 SC** | 10.1 |
| **Inorganic filler** | **Durcal 15 (CaCO₃)** | 80.1 |
| **Plastisizer** | **Foam stabilizer (DINP)** | 58.1 |
| **Wetting and dispersing agent of TiO₂ and ZnO** | **Disperplast 1150** | 0.3 |
| **Viscosity Modifiers** | **Viscobyk 4040** | 3.2 |
| **Prevent the foam release agent** | **BYK 3155** | 0.3 |
| **Foam stabilizer** | **BYK 8070** | - |
| | **TiO₂** | 2.3 |
| **Blowing agent** | **Azodicarbonamide** | 2.2 |
| | **ZnO** | 1 |
| **Conditions/Results** | **Pre-gelification phase** | 30 sec at 90°C |
| | **Gelification phase** | 2 min at 185°C |
| | **Coating appearance** | Very smooth |
| | **Thickness (in mm)** | 2.4 |
| | **Expansion rate (%)** | 220 |
| | **Expansion ratio (%)** | 320 |

### Example 7 (not in accordance with invention) Blowing agent = azodicarbonamide

The PVC Plastisol compositions of Example 7 were prepared in a Dispermat apparatus by using azodicarbonamide as the blowing agent. The azodicarbonamide product used was Genitron SCE (Lanxess) which consisted of 75 wt% azodicarbonamide and 25 wt% kicker (zinc oxide/zinc stearate). The components of the plastisol were dispersed on a high speed mixer and then mixed and de-aerated under vacuum. The resulting liquid PVC pastes (plastisols) of Example 7 are in each case spread coated at a thickness of about 0.75 mm on a piece of paper (Claire Fontaine) and heated in a Thermosol Werner Mathis oven set at 200 or 210°C for 90 or 120 seconds.

The expansion rate was the ratio of the difference between the final thickness of the foamed product after Werner Mathis oven heating and the initial thickness of the spread coated layer (here about 0.75 mm) before it passed the Werner Mathis oven heating, over the initial thickness. The expansion ratio was calculated as the ratio of the final thickness of the foamed product over the initial thickness of the spread coated layer (here about 0.75 mm). The specific components and amounts in each plastisol, the oven temperature, the time for gelation, the thickness of the foamed product after oven heating, the expansion rate, the expansion ratio, and the density of the PVC foams are provided in **TABLE 4** where "pcr" means parts by weight of PVC resin.

**TABLE 4 : Azodicarbonamide as blowing agent**

| **Example** | | **7** | | | | | |
|---|---|---|---|---|---|---|---|
| | Type of blowing agent | Azodicarbonamide | | | | | |
| | Plastisol Ex. | 7 p1 | 7 p2 | 7 p3 | 7 p4 | 7 p5 | 7 p6 |
| PVC resin | 367 NF | 100 | 100 | 100 | 100 | 100 | 100 |
| Filler | CaCO₃ | 120 | 120 | 120 | 120 | 120 | 120 |
| Plastisizer | Palatinol N | 80 | 80 | 80 | 80 | 80 | 80 |
| Defoamer | BYK3155 | - | 3 | - | 3 | - | 3 |
| Blowing agent | Genitron SCE (incl .25% zinc oxide/stearate) | 4 | 4 | 4 | 4 | 4 | 4 |
| | Gelation temp (°C) | 200 | 200 | 210 | 210 | 210 | 210 |
| | Gelation Time (sec.) | 120 | 120 | 120 | 120 | 90 | 90 |
| | Thickness (mm) | 3.16 | 3.06 | 3.33 | 3.42 | 2.58 | 2.80 |
| | Expansion rate (%) | 320 | 310 | 340 | 360 | 240 | 270 |
| | Expansion ratio (%) | 420 | 410 | 440 | 460 | 340 | 370 |
| | Density (g/cm ³) | 0.37 | 0.36 | 0.32 | 0.34 | 0.43 | 0.39 |

### Examples 8-9 (in accordance with invention) Functionalization Polyoxyalkylene Agent = Polyethylene Glycol (PEG400) with a melting point of 4-8°C

Two samples of functionalized sodium bicarbonate were prepared by extrusion of sodium bicarbonate particles with a polyethylene glycol of low molecular weight (<1000 g/mol): PEG400 as the functionalization agent. The functionalized sodium bicarbonate samples are identified as Example 8A (20 wt% PEG400) and Example 9A (10 wt% PEG400).

For Examples 8-9, PVC Plastisol compositions were prepared in a Dispermat apparatus. In each example, the components of the plastisols were dispersed on a high speed mixer and then mixed and de-aerated under vacuum. The resulting liquid PVC pastes (plastisols) are in each case spread coated at a thickness of about 0.75 mm on a piece of paper (Claire Fontaine) and heated in a Thermosol Werner Mathis oven set at 200 or 210 oC for 90 or 120 seconds. The expansion ratio is calculated as the ratio of the thickness of the foamed product after Werner Mathis oven heating over the initial thickness of the spread coated layer (here about 0.75 mm) before it passed the Werner Mathis oven heating. The specific components and amounts in each plastisol, the oven temperature, the time for gelation, the thickness of the foamed product after oven heating, the expansion ratio, and the density of the PVC foams are provided in **TABLE 5,** where "pcr" means parts by weight of PVC resin.

**TABLE 5 : Functionalization Polyoxyalkylene Agent = Polyethylene Glycol (PEG400)**

| **Example** | | **8** | | | | **9** | |
|---|---|---|---|---|---|---|---|
| | Functionalized Bicarbonate | Ex. 8A | | | | Ex. 9A | |
| | Funct. Method | extrusion | | | | extrusion | |
| | Funct. agent | 20 wt% PEG400 | | | | 10 wt% PEG400 | |
| | D10 /D50 /D90 (µm) | - | | | | - | |
| | Plastisol Ex. | 8 p1 | 8 p2 | 8 p3 | 8 p4 | 9 p1 | 9 p2 |
| PVC resin | 367 NF (pcr) | 100 | 100 | 100 | 100 | 100 | 100 |
| Filler | CaCO₃ (pcr) | 120 | 120 | 120 | 120 | 120 | 120 |
| Plastisizer | Palatinol N (pcr) | 80 | 80 | 80 | 80 | 80 | 80 |
| Defoamer | BYK3155 (pcr) | - | - | - | - | - | - |
| Blowing agent | Func. Bicar. (pcr) | 10 | 10 | 10 | 10 | 9 | 9 |
| | Gelation temp (°C) | 200 | 200 | 210 | 210 | 200 | 210 |
| | Gelation Time (sec.) | 90 | 120 | 90 | 120 | 90 | 90 |
| | Thickness (mm) | 2.52 | 2.14 | 2.80 | 2.62 | 2.54 | 2.43 |
| | Expansion ratio (%) | 340 | 290 | 370 | 350 | 340 | 320 |
| | Density (g/cm³) | 0.44 | 0.51 | 0.38 | 0.41 | 0.44 | 0.44 |

### Examples 10-11 (not in accordance with invention) Functionalization Polyoxyalkylene Agent = Polyethylene Glycol (PEG4000) with a melting point of 54-58°C

Three samples of functionalized sodium bicarbonate were prepared by extrusion of sodium bicarbonate particles with a polyethylene glycol of high molecular weight (>1000): PEG 4000, and then milling. The functionalized sodium bicarbonate samples are identified as Example 10A (extruded with 7 wt% PEG4000), Example 11A (extruded with 10 wt% PEG4000), Example 12A (extruded with 3 wt% PEG4000.

For Examples 10-12, the same method of preparation of the PVC Plastisol compositions and preparation of PVC foams were used as described for Examples 8-9. The expansion ratio was calculated as the ratio of the thickness of the foamed product after Werner Mathis oven heating over the initial thickness of the spread coated layer (here about 0.75 mm) before it passed the Werner Mathis oven heating. The specific components and amounts in each plastisol, the oven temperature, the time for gelation, the thickness of the foamed product after oven heating, the expansion ratio and the density of the PVC foams are provided in **TABLE 6,** where "pcr" means parts by weight of resin.

**TABLE 6: Functionalization Polyoxyalkylene Agent = Polyethylene Glycol (PEG4000) with a melting point of 54-58°C**

| **Example** | | **10** | | | **11** | | | |
|---|---|---|---|---|---|---|---|---|
| | Functionalized Bicarbonate | Ex. 10A | | | Ex. 11A | | | |
| | Funct. Method | Extrusion / milling | | | Extrusion/ milling | | | |
| | Funct. agent | 7 wt% PEG4000 | | | 3 wt% PEG4000 | | | |
| | D10 /D50 /D90 (µm) | 5 / 22 / 57 | | | 5 / 25 / 61 | | | |
| | Plastisol Ex. | 10 p1 | 10 p2 | 10 p3 | 11 p1 | 11 p2 | 11 p3 | 11 p4 |
| PVC resin | 367 NF (per) | 100 | 100 | 100 | 100 | 100 | 100 | 100 |
| Filler | CaCO₃ (pcr) | 120 | 120 | 120 | 120 | 120 | 120 | 120 |
| Plastisizer | Palatinol N (pcr) | 80 | 80 | 80 | 80 | 80 | 80 | 80 |
| Defoamer | BYK3155 (pcr) | - | - | - | - | - | - | - |
| Blowing agent | Func. Bicar. (pcr) | 8 | 8 | 8 | 8 | 8 | 8 | 8 |
| | Gelation temp (°C) | 200 | 210 | 210 | 200 | 200 | 210 | 210 |
| | Gelation Time (sec.) | 120 | 90 | 120 | 90 | 120 | 90 | 120 |
| | Thickness (mm) | 1.43 | 1.72 | 1.53 | 2.39 | 2.46 | 2.89 | 2.19 |
| | Expansion ratio (%) | 190 | 230 | 200 | 230 | 190 | 240 | 220 |
| | Density (g/cm³) | 0.79 | 0.66 | 0.74 | 0.66 | 0.79 | 0.62 | 0.76 |

The expansion ratio obtained with the PEG4000-functionalized sodium bicarbonate was from 190 to 240% (PEG4000 being a solid at ambient temperature), much lower than the expansion ratio of 290-379 % obtained with the PEG400-functionalized sodium bicarbonate (PEG400 being a liquid at ambient temperature)

### Examples 12-13 (in accordance with invention) Functionalization Polyoxyalkylene Agent = BYK 3155 - liquid at 20°C (melting point less than 20°C)

Two samples of functionalized sodium bicarbonate were prepared by extrusion of sodium bicarbonate particles with a polyoxyalkylene compound as the functionalization agent. The polyoxyalkylene compound is a product sold by BYK under the brandname BYK 3155 which may be used as an air release agent. It is liquid at room temperature of about 20°C (melting point less than 20°C). The functionalized sodium bicarbonate samples are identified as Example12A (10 wt% BYK 3155) and Example 13A (20 wt% BYK 3155).

For Examples 12-13, the same method of preparation of the PVC Plastisol compositions and preparation of PVC foams were used as described for Examples 8-9. The expansion ratio was calculated as the ratio of the thickness of the foamed product after Werner Mathis oven heating over the initial thickness of the spread coated layer (here about 0.75 mm) before it passed the Werner Mathis oven heating. The specific components and amounts in each plastisol, the oven temperature, the time for gelation, the thickness of the foamed product after oven heating, the expansion ratio and the density of the PVC foams are provided in **TABLE 7,** where "pcr" means parts by weight of PVC resin.

**TABLE 7 : Functionalization Agent = Polyoxyalkylene BYK-3155**

| **Example** | | **12** | | | | **13** | | |
|---|---|---|---|---|---|---|---|---|
| | Functionalized Bicarbonate | Ex. 12A | | | | Ex. 13A | | |
| | Funct. Method | extrusion | | | | extrusion | | |
| | Funct. agent | 10 wt% BYK3155 | | | | 20 wt% BYK3155 | | |
| | D10/D50/D90 (µm) | n/d | | | | n/d | | |
| | Plastisol Ex. | 12 p1 | 12 p2 | 12 p3 | 12 p4 | 13p1 | 13 p2 | 13 p3 |
| PVC resin | 367 NF (pcr) | 100 | 100 | 100 | 100 | 100 | 100 | 100 |
| Filler | CaCO₃ (pcr) | 120 | 120 | 120 | 120 | 120 | 120 | 120 |
| Plastisizer | Palatinol N (pcr) | 80 | 80 | 80 | 80 | 80 | 80 | 80 |
| Defoamer | BYK3155 (pcr) | - | - | - | - | - | - | - |
| Blowing agent | Func. Bicar. (pcr) | 9 | 9 | 9 | 9 | 10 | 10 | 10 |
| | Gelation temp (°C) | 200 | 200 | 210 | 210 | 200 | 210 | 210 |
| | Gelation Time (sec.) | 90 | 120 | 90 | 120 | 120 | 90 | 120 |
| | Thickness (mm) | 2.03 | 2.06 | 2.30 | 2.08 | 2.43 | 2.60 | 2.45 |
| | Expansion ratio (%) | 270 | 270 | 310 | 280 | 320 | 350 | 330 |
| | Density (g/cm³) | 0.52 | 0.54 | 0.47 | 0.51 | 0.45 | 0.41 | 0.44 |

### Examples 14-15 (in accordance with invention) With Polyoxyalkylene Agent = Polyethylene Glycol (PEG400) With Additional Functionalization Additive = Stearic acid

Two samples of functionalized sodium bicarbonate were prepared by applying two different functionalization additives (stearic acid, PEG400) added sequentially using two different methods of functionalization (co-grinding, extrusion). First the sodium bicarbonate particles were functionalized by co-grinding them with stearic acid as a first functionalization additive, and then the first-functionalized particles were functionalized by extruding them with PEG400 as a second functionalization additive to form second-functionalized particles. The samples are identified as Example 14A (3.2 wt% stearic acid, 10 wt% PEG400) and Example 15A (2.8 wt% stearic acid, 20 wt% PEG400).

For Examples 14-15, the same method of preparation of the PVC Plastisol compositions and preparation of PVC foams were used as described for Examples 8-9. The expansion ratio was calculated as the ratio of the thickness of the foamed product after Werner Mathis oven heating over the initial thickness of the spread coated layer (here about 0.75 mm) before it passed the Werner Mathis oven heating. The specific components and amounts in each plastisol, the oven temperature, the time for gelation, the thickness of the foamed product after oven heating, the expansion ratio, and the density of the PVC foams are provided in **TABLE 8,** where "pcr" means parts by weight of PVC resin.

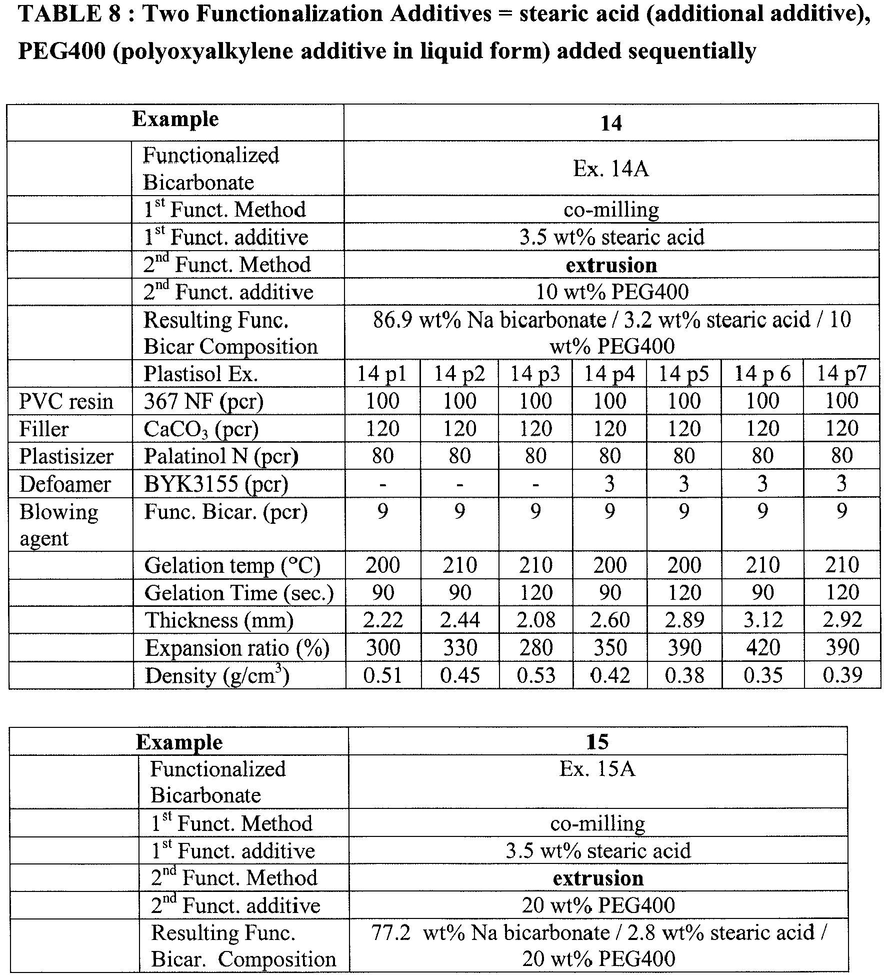

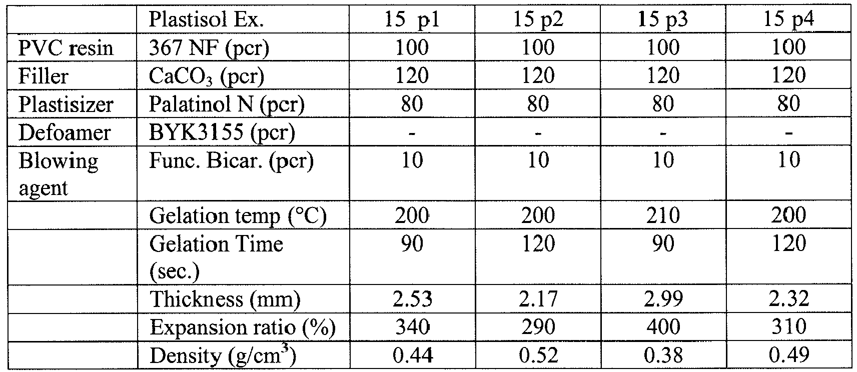

### Example 16 (not in accordance with invention) Functionalization Additive = none

A commercial sodium bicarbonate (SB/03 from Solvay) was milled to reduce the particle size. The sample is identified as Example 16A (without functionalization agent).

For Example 16, PVC Plastisol compositions were prepared in a Dispermat apparatus. In each example, the components of the plastisols were dispersed on a high speed mixer and then mixed and de-aerated under vacuum. The resulting liquid PVC pastes (plastisols) are in each case spread coated at a thickness of about 0.75 mm on a piece of paper (Claire Fontaine) and heated in a Thermosol Werner Mathis oven set at 200 or 210 °C for 90 or 120 seconds. The expansion ratio was calculated as the ratio of the thickness of the foamed product after Werner Mathis oven heating over the initial thickness of the spread coated layer (here about 0.75 mm) before it passed the Werner Mathis oven heating. The specific components and amounts in each plastisol, the oven temperature, the time for gelation, the thickness of the foamed product after oven heating, the expansion ratio and the density of the PVC foams are provided in **TABLE 9,** where "pcr" means parts by weight of PVC resin.

**TABLE 9: Without functionalization additive Without additional endothermic blowing agent**

| **Example** | | **16** | | | |
|---|---|---|---|---|---|
| | Non-Functionalized bicarbonate | Ex. 16A | | | |
| | D10 /D50 /D90 (µm) | 1.3 / 7 / 16 | | | |
| | Plastisol Ex. | 16 p1 | 16 p2 | 16 p3 | 16 p4 |
| PVC resin | 367 NF (pcr) | 100 | 100 | 100 | 100 |
| Filler | CaCO₃ (pcr) | 120 | 120 | 120 | 120 |
| Plastisizer | Palatinol N (pcr) | 80 | 80 | 80 | 80 |
| Defoamer | BYK3155 (pcr) | - | - | - | - |
| Blowing agent | Non-Func. Bicar. (pcr) | 8 | 8 | 8 | 8 |
| | Gelation temp (°C) | 200 | 200 | 210 | 210 |
| | Gelation Time (sec.) | 90 | 120 | 90 | 120 |
| | Thickness (mm) | 1.22 | 1.07 | 1.20 | 1.11 |
| | Expansion ratio (%) | 160 | 140 | 160 | 150 |
| | Density (g/cm³) | 0.90 | 1.03 | 0.92 | 1.00 |

## Claims

1. A process for preparing a formulation comprising an alkali metal bicarbonate, wherein said process comprises the steps of:
(a) mixing a functionalizing agent and a particulate alkali metal bicarbonate to obtain a paste-like mixture; and
(b) extruding the paste-like mixture obtained in step (a) at an extrusion operating temperature, wherein the functionalization agent has a melting temperature less than the extrusion operating temperature.

2. The process of claim 1, wherein the paste-like mixture undergoing extrusion comprises at least 25% by weight of said alkali metal bicarbonate based on the total weight of the mixture undergoing extrusion (that includes the functionalizing agent and alkali metal bicarbonate).

3. The process of claim 1 or 2, wherein at step (a) the weight ratio of functionalizing agent is at least 3, more preferably at least 5, even more preferably at least 10, even more preferably at least 15 parts per 100 parts of alkali metal bicarbonate.

4. The process of any preceding claims, wherein at step (b) the formulation is a powder, filaments or granules, comprising alkali metal bicarbonate particles and the functionalizing agent.

5. The process of any one of the preceding claims, wherein the extrusion operating temperature is ambient temperature, and wherein the functionalizing agent is selected with the proviso that its melting temperature is less than ambient temperature.

6. The process of any one of the preceding claims, wherein the melting point of the functionalizing agent is at most 20°C, preferably at most 15°C.

7. The process of any one of the preceding claims, wherein the functionalizing agent comprises a polyoxyethylene compound or a derivative thereof.

8. The process of claim 7, wherein the polyoxyalkylene compound comprises or consists of:
a polyethylene glycol (PEG) polymer, preferably of a MW of 2000 or less, or a MW of 1000 or less, or a MW of 800 or less,
a polypropylene glycol (PPG) polymer,
a co-polymer or block polymer which is made with at least one monomer of propylene glycol,
a co-polymer or block polymer which is made with at least one monomer of ethylene glycol,
a polyethylene glycol / polypropylene glycol (PEG/PPG) block co-polymer, such as the PEG/PPG/PEG triblock polymer, or
any derivatives (such as esters) thereof.

9. The process of any one of the claims 1-7, wherein the functionalizing agent comprises or consists of:
- a polyethylene glycol, preferably a polyethylene glycol with a molecular weight less than 1000 g/mol,
- a polyoxyalkylene derivative which is an ester, such as a PEG or PPG ester,
- a polyoxyalkylene derivative which is a chemically functionalized polyoxyalkylene, for example, a polyoxyalkylene bearing one or more reactive substituents, such as -OH, -NH₂, -NHR, -SH and -COOH, wherein R is a hydrocarbon residue, and which has been reacted with a functional chemical compound being reactive with the reactive substituent of the polyoxyalkylene,
- or combinations thereof.

10. The process of any one of the preceding claims, wherein the alkali metal bicarbonate used at step (a) is made of particles, and the medium particle size (D50 in weight) of said particles is 10-300 µm, preferably 20-200 µm, more preferably 30-150 µm, more preferably 40-130 µm.

11. The process of claim 5, wherein the filaments or granules are subsequently cut into pieces or milled.

12. Use of the alkali metal bicarbonate formulation made by the process according to any one of claims 1-11 as blowing or foaming agent for polymers.

13. A chemical blowing agent comprising or consisting of the alkali metal bicarbonate formulation, preferably made by the process according to any one of claims 1-11.

14. A foamable PVC plastisol composition, comprising a PVC resin, optionally a foaming stabilizer, and the chemical blowing agent according to claim 13, which preferably does not contain azodicarbonamide, benzenesulfonylhydrazide, and/or p-toluenesulfonylhydrazide.

15. A process for manufacturing a PVC polymer, comprising heating the foamable PVC polymer composition according to claim 30 which comprises the functionalized particulate bicarbonate and the PVC resin at a temperature suitable for liberating CO2 gas and melting the PVC polymer during a gelation time from 90 seconds to 120 seconds at a temperature from 190 to 210°C, preferably from 200 to 210°C, to provide a foamed PVC polymer, wherein the foamable polymer composition preferably is spread coated on a surface before heating and melting, and wherein the foamed polymer has an expansion ratio of at least 270, preferably at least 280, more preferably at least 300 and/or has a density of less than 0.6 g/cm³, preferably less than 0.55 g/cm³, more preferably at most 0.5 g/cm³.
